# EUROPEAN PATENT SPECIFICATION

(11) **EP 4 170 094 B1**
(45) Date of publication and mention of the grant of the patent: **21.01.2026**
(21) Application number: 22198643.3
(22) Date of filing: 29.09.2022
(51) Int. Cl.: E02B 3/04, A01K 61/73

(54) **UNDERWATER INSTALLATION STRUCTURE**
UNTERWASSERINSTALLATIONSSTRUKTUR
STRUCTURE D'INSTALLATION SOUS-MARINE

(30) Priority: 25.10.2021 IT 202100027365
(43) Date of publication of application: 26.04.2023
(73) Proprietor: TECHNO BLUE S.r.l., 44121 Ferrara (IT)
(72) Inventor: DANESE, Giorgio, 37127 Verona (IT)
(74) Representative: Ponchiroli, Simone

(56) References cited:
- WO-A1-97/03554
- FR-A1- 2 579 643

## Description

This invention relates to an underwater installation structure intended to be installed on an underwater bed of a body of water. In particular, the structures according to this invention are structures mainly intended to be installed along the coastal strip, that is to say the zone joining the land and the sea (or a lake), where all of those physical and biological phenomena which shape the coast and give it its character occur. Even more specifically, they are structures which can perform various functions, all in general linked to the reestablishment or to the maintenance of the underwater environment. The main functions may include renaturalisation of compromised marine/lake environments, fish repopulation and containment of erosive phenomena.

At present various types of structures are known which can be installed on an underwater bed of a body of water to perform the functions indicated above.

The simplest kind of structure, described in WO 97/03554, is constituted by closely spaced horizontal slabs arranged one above the other and having a highly roughened surface and perforations through which young fishes can pass.

Another kind of submarine structure is described in FR 2579643, and consists of a monolithic solid in the shape of a sort of a cage.

Amongst the various known types, those which over the years have proven to be technically the best and capable of guaranteeing the best results, are structures made by assembling a plurality of flat plates with polygonal shape made of concrete. Examples of such structures are described in patents EP 1193348 B1, EP 1416092 B1 WO 97/03554 A1 and EP 2215019 B1.

Although, as said, the structures made using concrete polygonal flat plates guarantee optimum results, when the Applicant, who has always been active in the sector, dedicated himself to making increasingly large and extensive structures, he was able to ascertain that the way in which they have been made until now is not without disadvantages. In particular, the larger the structure to be made is, the longer and more complex the installation operations are due to the need to drop the plates into the sea one at a time then constrain them to each other.

In this context, the technical purpose which forms the basis of this invention is to make an underwater installation structure which overcomes the above-mentioned disadvantages.

**In** particular the technical purpose of this invention is to make an underwater installation structure which is simpler to install than the prior art structures, even in the case of large installations.

The technical purpose specified and the aims indicated are substantially achieved by an underwater installation structure as described in the appended independent claims. Particular embodiments of this invention are defined in the corresponding dependent claims.

Further features and the advantages of this invention are more apparent in the detailed description below, with reference to several preferred, nonlimiting embodiments of an underwater installation structure, illustrated in the accompanying drawings, in which:
- Figure 1 shows, in an axonometric view from a first viewpoint, a first module which is part of an underwater installation structure made in accordance with this invention;
- Figures 2 and 3 show the first module of Figure 1, in an axonometric view from two further viewpoints;
- Figure 4 shows, in an axonometric three-quarter view, a first example of an underwater installation structure in accordance with this invention;

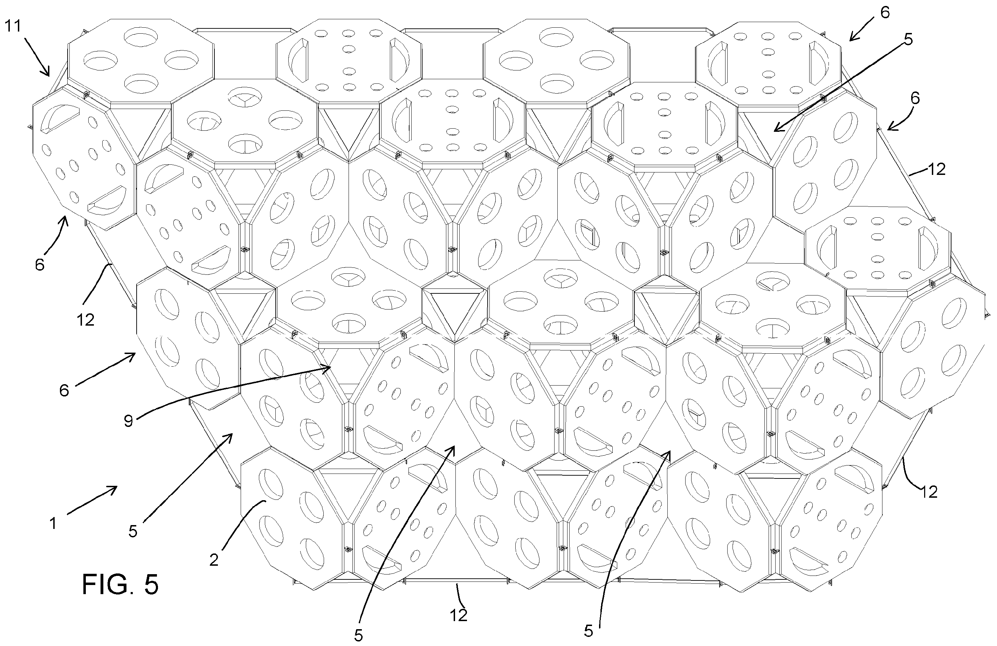

- Figure 5 shows the underwater installation structure of Figure 4, in a top view;

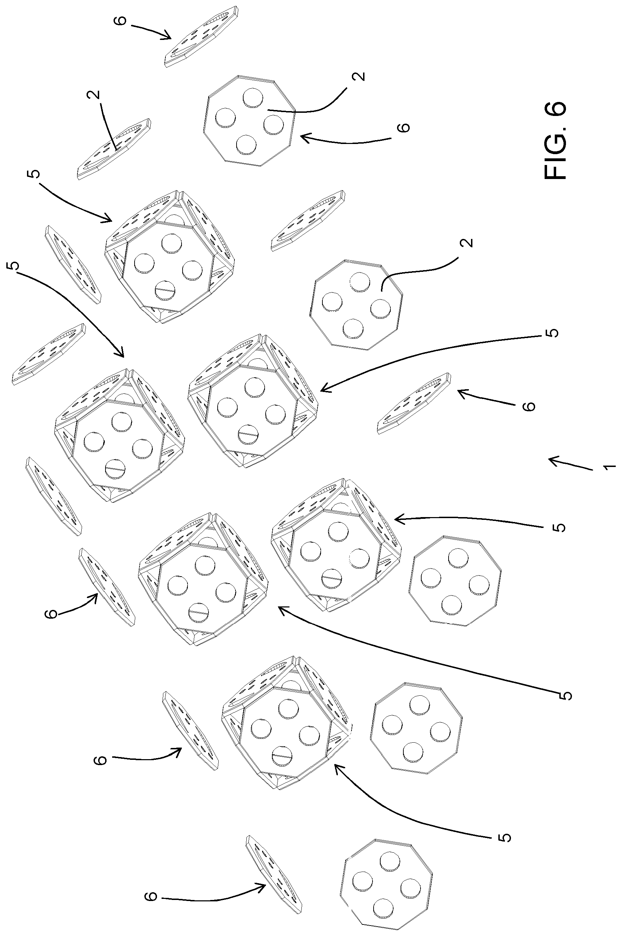

- Figure 6 shows the underwater installation structure of Figure 4, in an exploded axonometric view;

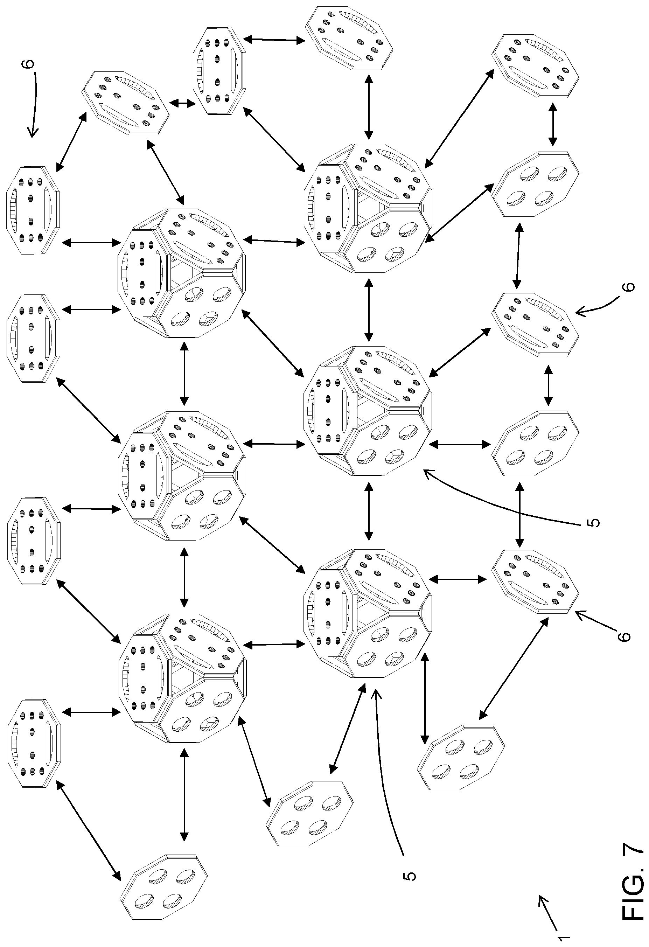

- Figure 7 shows the underwater installation structure of Figure 6, in a top view and with an indication of the directions for connection of the various modules which are part of it (double arrows);
- Figure 8 shows, in an axonometric three-quarter view, a second example of an underwater installation structure in accordance with this invention;

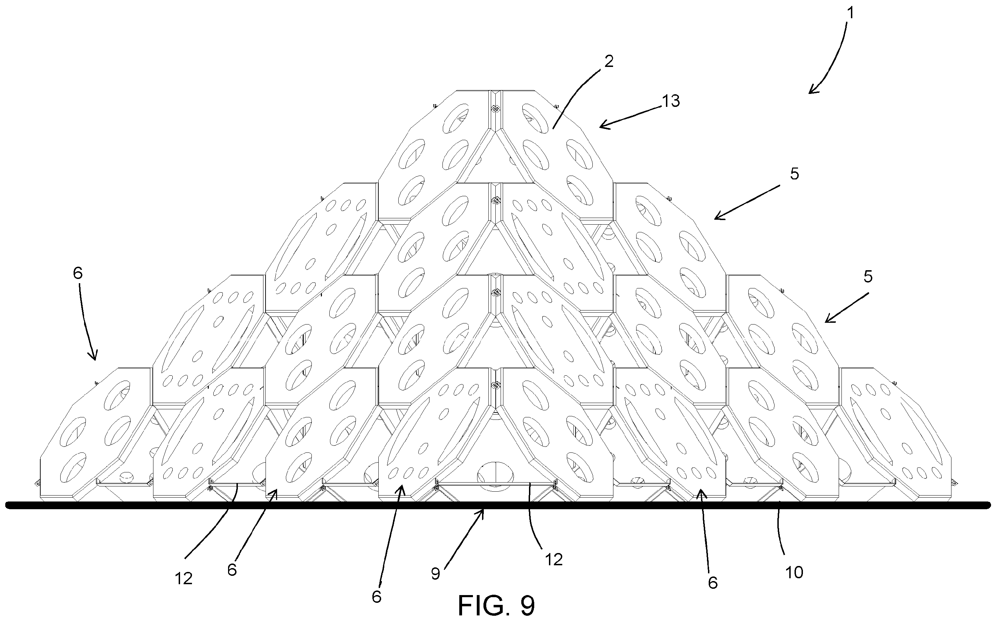

- Figure 9 shows the underwater installation structure of Figure 8, in a front view;
- Figure 10 shows, in an exploded front view, a third example of an underwater installation structure made in accordance with this invention;

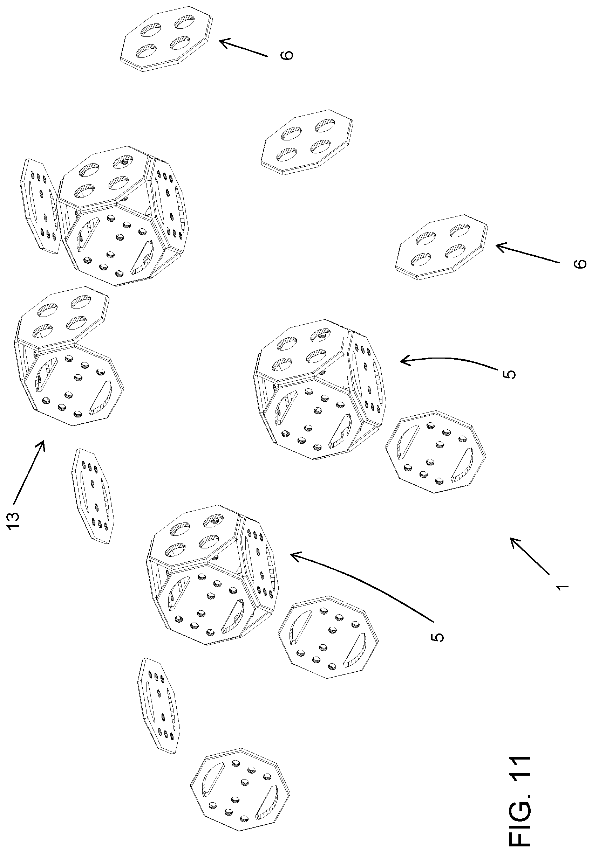

- Figure 11 shows the underwater installation structure of Figure 10, in an axonometric view;

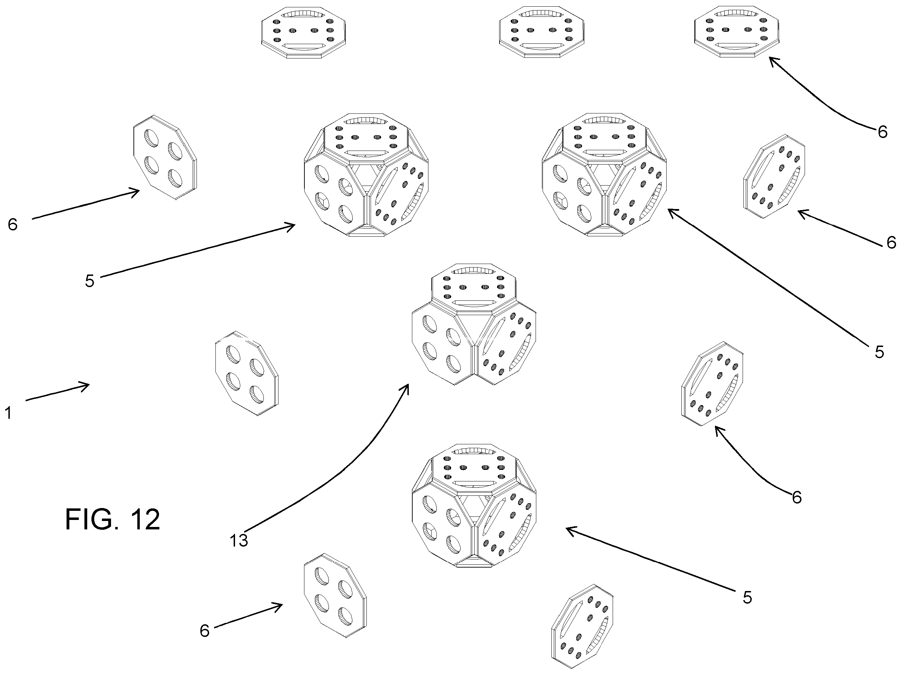

- Figure 12 shows the underwater installation structure of Figure 10, in a top view.

As can be seen from the embodiments illustrated in the accompanying figures, the underwater installation structure 1 according to this invention (hereinafter simply indicated as the structure 1) is not a structure with a single and predetermined shape, but is a structure 1 which comprises modules which can be combined each time in such a way as to make the structure 1 best suited to the individual installation. Furthermore, the structure 1 according to this invention may also have different dimensions depending on the requirements, and that may be achieved by combining a different number of modules.

In general the structure 1 comprises a plurality of flat plates 2 connected to each other in the innovative ways described below. In the known way, the flat plates 2 have a polygonal shape and are mainly constituted of concrete (reinforced or not). In the context of this description, the polygonal shape is that of the outer edge of the flat plates 2 when the flat plates 2 are viewed perpendicularly to their main lying plane. Each flat plate 2 also has a predetermined thickness, in any case significantly less than the other dimensions.

Advantageously the flat plates 2 all have the same polygonal shape and are the same size.

Advantageously the flat plates 2 have the shape of a regular polygon.

In the preferred embodiments the flat plates 2 have an octagonal shape, advantageously the shape of a regular octagon, in such a way that each side has the same length and can therefore be coupled to any side of any other flat plate 2.

**In** some embodiments, the flat plates 2 may be identical to each other even as regards the presence or absence of openings through them.

**In** other embodiments, in contrast, the flat plates 2 may be different from each other as regards the presence or absence of openings through them. Furthermore, there may even be flat plates 2 which have different types of through openings.

Therefore, present in each structure 1, there may be solid flat plates 2, and/or flat plates 2 provided with a plurality of first holes 3, and/or flat plates 2 provided with a plurality of second holes 4 which are different from the first holes.

**In** the embodiments illustrated in the accompanying figures, there are both flat plates 2 provided with a plurality of first holes 3 (four circular holes), and flat plates 2 provided with a plurality of second holes 4 which are different from the first holes (the holes 4 of the second plurality being made as indicated in EP 1416092 B1).

**In** some embodiments, to allow connection between the flat plates 2, each of them has, at least at some sides of their edge, preferably at all of the sides, fixing elements embedded in the concrete and/or projecting cantilever-style from the concrete (fixing elements which are in themselves known and are therefore not described in detail).

**In** accordance with the main innovative aspect of this invention, the underwater installation structure 1 comprises at least one or more first modules 5 and one or more second modules 6 connected to each other, where the first modules 5 are preferably ready-assembled and are different from the second modules 6. **It** may also optionally comprise further modules (third, fourth, etc.) wherein each further module is different from the first modules 5 and from the second modules 6, is preferably ready-assembled, and comprises a plurality of flat plates 2 connected to each other. Moreover it is advantageously connected to one or more first modules 5 and/or second modules 6.

In accordance with this invention, the modules shall be understood to be of the same type (first modules 5, second modules 6, etc.) when they are constituted of the same number of flat plates 2 positioned in the same way relative to each other.

In general, any basic module comprises one or more flat plates 2.

However, in accordance with this invention, each first module 5 comprises four or more flat plates 2 connected to each other which together define a polyhedral structure 1 (that is to say, a structure 1 with the shape of a polyhedron).

In turn, in contrast, the second modules 6 may comprise either a single flat plate 2 (preferred solution adopted in the embodiments illustrated in the accompanying figures), or two or more flat plates 2 connected to each other. The polyhedral structure 7 defined by the first modules 5 is understood to be a three-dimensional structure 1 in which the flat plates 2 define the outer faces. In the preferred embodiments the polyhedral structure 7 is completely hollow inside, but in any case it is possible for flat plates 2 to be present even on the inside.

Advantageously, the flat plates 2 may define the faces of the polyhedral structure 7 in two ways: either by constituting a face themselves, or by defining with their edges the perimeter of faces which are otherwise completely empty (that is to say, they define openings which put the inside of the polyhedral structure 7 in communication with the outside.

In some embodiments such as those illustrated in the accompanying figures, the polyhedral structure 7 comprises a plurality of first faces 8 each defined by a flat plate 2, and a plurality of empty second faces 9, each perimetrically delimited by a plurality of flat plates 2 which define the first faces 8. Preferably, the first faces 8 are the same as each other, whilst the second faces 9 are smaller than the first faces 8.

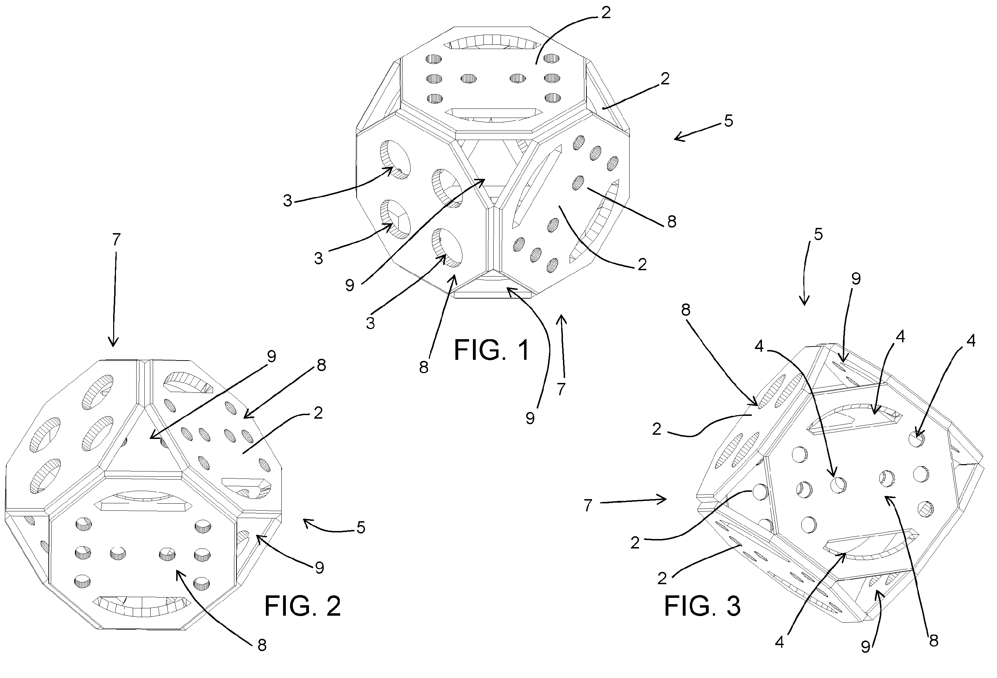

In the preferred embodiment, in which the flat plates 2 have the shape of regular octagons, as illustrated in Figures 1 to 3, each first module 5 comprises six flat plates 2, connected to each other and positioned in such a way that each flat plate 2 defines part of a different face of a cube (or, in other words, lies on a face of a cube).

The six flat plates 2 are therefore parallel and aligned with each other in pairs, and the flat plates 2 of each pair are perpendicular to those of the other two pairs.

In each first module 5 each first face 8 is defined by a flat plate 2 and therefore has an octagonal shape, whilst each second face 9 has a triangular shape and is delimited by three flat plates positioned perpendicularly to each other (therefore the second faces 9 are obtained at the zone where three flat plates 2 converge towards the ideal corner of the cube on which the flat plates 2 lie (Figure 3). Therefore, in the preferred embodiment, the polyhedral structure 7 comprises six flat plates 2 with the shape of a regular octagon (at the six faces of the cube) and eight triangular second faces 9 (at the eight corners of the cube).

As said the various modules can be combined as desired.

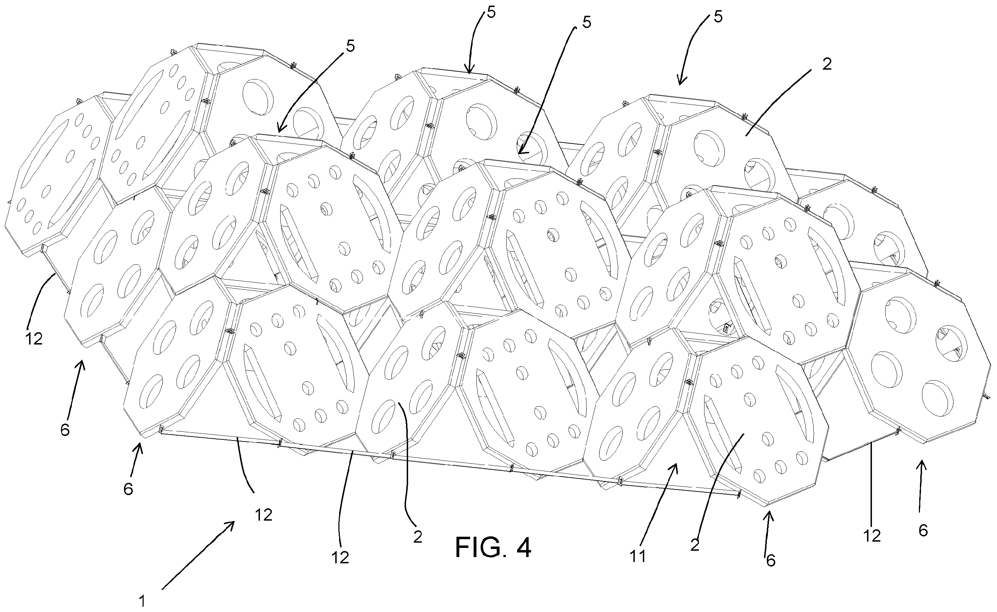

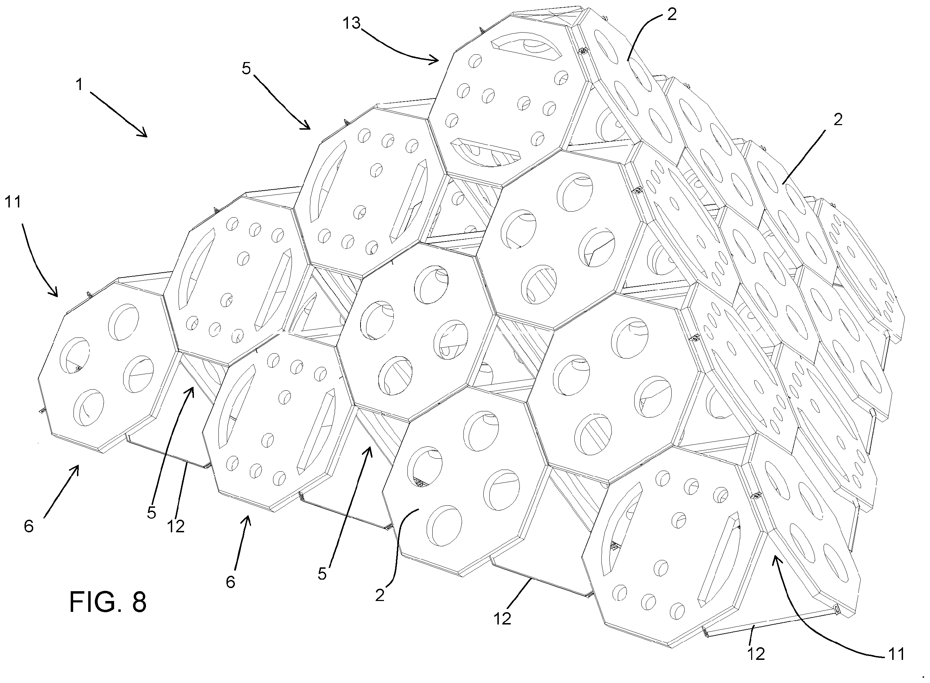

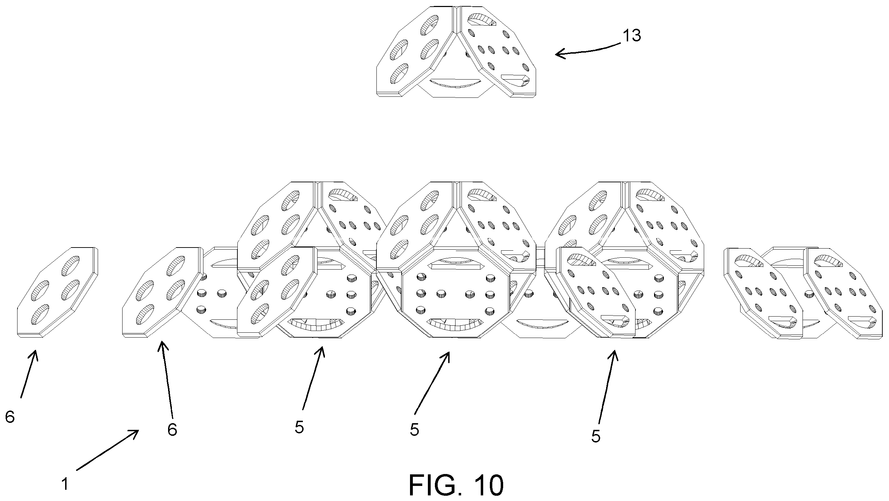

However, in the assembled structure 1, preferably the one or more first modules 5 constitute a central core of the structure 1, and are positioned on one (Figure 4 and 10) or more layers (Figure 8 in which there are nine first modules 5 present in the lower layer, and four first modules 5 in the upper layer).

Advantageously, at least some of the one or more first modules 5 are positioned with one of their second faces 9 resting on the bed 10 of the body of water (as if the corner of the cube were driven into the bed 10 of the body of water).

In the preferred embodiments, in which each second module 6 comprises a single flat plate 2, each second module 6 is connected to at least one first module 5 and is positioned in such a way that the flat plate 2 is parallel to and coplanar with at least one flat plate 2 of the first module 5 to which it is connected.

One of the simplest embodiments of this invention comprises the use of a single first module 5 positioned with a second face 9 resting on the bed 10 of the body of water, and of eight second modules 6 coupled in pairs to form a V and fixed to the first module 5 to form four resting corners 11, like that visible in the foreground in the pyramid of modules of Figure 8.

More in general, when a structure 1 according to this invention is installed, at least some of the one or more first modules 5 are positioned with one of their second faces 9 resting on the bed 10 of the body of water, and at least some second modules 6 are fixed to the first modules 5 and are also resting on the bed 10 of the body of water.

In some embodiments the structure 1 may also comprise a plurality of stiffening rods 12 mounted between one or more first modules 5, and/or between one or more second modules 6, and/or between one or more first modules 5 and one or more second modules 6.

As illustrated for example in Figure 4 and 8, the stiffening rods 12 are advantageously fixed to free fixing elements of the flat plates. In some embodiments, the stiffening rods 12 are advantageously mounted between second modules 6 which are adjacent, but not in contact, which are resting on the bed 10 of the body of water.

Finally, in the embodiments illustrated in Figures 8 and 10, at the top the structure 1 also comprises a third module 13 which comprises three flat plates 2 connected to each other to form a pyramid, wherein each of the three flat plates 2 is perpendicular to the other two (the third module 13 corresponds to half of a first module 5 illustrated in Figure 1).

This invention also relates to a preferred method for making the underwater installation structure 1 as described above.

The method comprises first an operating step during which one or more first modules 5 are assembled (the number depending on the final design of the structure 1), by constraining a plurality of flat plates 2 to each other.

Then the ready-assembled first modules 5 are positioned on an underwater bed 10 of a body of water in predetermined positions relative to each other, preferably with one of their second faces 9 resting on the bed 10 of the body of water.

At this point, if two or more first modules 5 are present, the method comprises constraining the first modules 5 to each other.

Finally the method comprises constraining a plurality of second modules 6 to the first modules 5, and constraining any further modules.

This invention brings important advantages.

Thanks to the fact that the structure was devised as a set of two (or more) modules it has in fact allowed an underwater installation structure to be made which is simpler to install than the prior art structures, and which can even allow significant simplification of the installation of large installations. Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. An underwater installation structure comprising a plurality of flat plates (2) connected to each other, the flat plates (2) having a polygonal shape and being mainly constituted of concrete, said structure being **characterised in that** the underwater installation structure comprises at least one or more first modules (5) and one or more second modules (6) connected to each other, the first modules (5) being different from the second modules (6), each second module (6) comprising one or more of said flat plates (2), and each first module (5) comprising a polyhedral structure (7) defined by four or more of said flat plates (2) connected to each other.

2. The underwater installation structure according to claim 1, wherein the polyhedral structure (7) comprises a plurality of first faces (8) each defined by a flat plate (2), and a plurality of empty second faces (9), each perimetrically delimited by a plurality of flat plates (2) which define the first faces (8).

3. The underwater installation structure according to claim 2, wherein the second faces (9) are smaller than the first faces (8).

4. The underwater installation structure according to claim 1, 2 or 3, wherein each flat plate (2) has an octagonal shape.

5. The underwater installation structure according to claim 4, wherein each flat plate (2) has the shape of a regular octagon.

6. The underwater installation structure according to any one of claims 1 to 5, wherein each first module (5) comprises six flat plates (2) connected to each other and positioned in such a way that each flat plate (2) defines part of a different face of a cube.

7. The underwater installation structure according to claim 6 when it is dependent on 2 and on 5, wherein in each first module (5) each first face (8) is defined by a flat plate (2) and has an octagonal shape, and wherein each second face (9) has a triangular shape and is delimited by three flat faces positioned perpendicularly to each other.

8. The underwater installation structure according to any one of claims 1 to 7, wherein each second module (6) comprises a single flat plate (2).

9. The underwater installation structure according to claim 8, wherein each second module (6) is connected to at least one first module (5) in such a way that its flat plate (2) is parallel to and coplanar with at least one flat plate (2) of the first module (5) to which it is connected.

10. The underwater installation structure according to any one of claims 1 to 9, also comprising one or more third modules, wherein each third module (13) is different from the first modules (5) and from the second modules (6), is ready-assembled, comprises a plurality of flat plates (2) connected to each other, and is connected to one or more first modules (5) and/or second modules (6).

11. The underwater installation structure according to any one of claims 1 to 10, wherein one or more flat plates (2) are solid, and/or wherein one or more flat plates (2) are provided with a plurality of first holes (3), and/or wherein one or more flat plates (2) are provided with a plurality of second holes (4) which are different from the first holes.

12. The underwater installation structure according to claim 2 and any one of the others, wherein, when the structure (1) is installed, the one or more first modules (5) constitute a central core of the structure (1) and at least some of the one or more first modules (5) are positioned with one of their second faces (9) resting on the bed (10) of the body of water, and at least some of the second modules (6) are fixed to the first modules (5) and resting on the bed (10) of the body of water.

13. The underwater installation structure according to any one of claims 1 to 12, also comprising a plurality of stiffening rods (12) mounted between one or more first modules (5), and/or between one or more second modules (6), and/or between one or more first modules (5) and one or more second modules (6).

14. The underwater installation structure according to any one of claims 1 to 13, wherein each one of the four or more flat plates (2) which are connected to each other and define the polyhedral structure (7), constitutes a face of the polyhedral structure (7).

15. A method for making the underwater installation structure (1) according to any one of claims 1 to 14, comprising the following operating steps:
assembling one or more first modules (5) by constraining a plurality of flat plates (2) to each other;
positioning the one or more first modules (5) on an underwater bed (10) of a body of water in predetermined positions relative to each other;
if two or more first modules (5) are present, constraining the first modules (5) to each other;
constraining a plurality of second modules (6) to the first modules (5); wherein the step of constraining the plurality of second modules (6) to the first modules (5) is executed after the step of assembling the one or more first modules (5).

16. The method according to claim 15 when it is dependent on 2, wherein the first modules (5) are positioned with the second faces (9) resting on the underwater bed (10) of a body of water.

## Patentansprüche

1. Eine Struktur zur Unterwasserinstallation, eine Mehrzahl von flachen Platten (2), die miteinander verbunden sind, beinhaltend, die flachen Platten (2) haben dabei eine polygonale Form und bestehen dabei hauptsächlich aus Beton, besagte Struktur ist dabei **dadurch gekennzeichnet, dass** die Struktur zur Unterwasserinstallation mindestens ein oder mehrere erste Module (5) und ein oder mehrere zweite Module (6) beinhaltet, die miteinander verbunden sind, die ersten Module (5) unterscheiden sich dabei von den zweiten Modulen (6), jedes zweite Modul (6) beinhaltet dabei eine oder mehrere der besagten flachen Platten (2), und jedes erste Modul (5) beinhaltet dabei eine polyedrische Struktur (7), die durch vier oder mehrere der besagten Flachen Platten (2), die miteinander verbunden sind, definiert ist.

2. Die Struktur zur Unterwasserinstallation nach dem Patenanspruch 1, wobei die polyedrische Struktur (7) eine Mehrzahl erster Flächen (8), von denen jede durch eine flache Platte (2) definiert ist, und eine Mehrzahl leerer zweiter Flächen (9), von denen jede an ihrer Umfangslinie durch eine Mehrzahl flacher Platten (2) begrenzt wird, die die ersten Flächen (8) definieren, beinhaltet.

3. Die Struktur zur Unterwasserinstallation nach dem Patenanspruch 2, wobei die zweiten Flächen (9) kleiner als die ersten Flächen (8) sind.

4. Die Struktur zur Unterwasserinstallation nach dem Patenanspruch 1, 2 oder 3, wobei jede flache Platte (2) eine achteckige Form hat.

5. Die Struktur zur Unterwasserinstallation nach dem Patenanspruch 4, wobei jede flache Platte (2) die Form eines regelmäßigen Achtecks hat.

6. Die Struktur zur Unterwasserinstallation nach jedem der Patenansprüche 1 bis 5, wobei jedes erste Modul (5) sechs flache Platten (2) beinhaltet, die miteinander verbunden und so positioniert sind, dass jede flache Platte (2) einen Teil einer anderen Fläche eines Kubus definiert.

7. Die Struktur zur Unterwasserinstallation nach dem Patenanspruch 6, wenn er von 2 und von 5 abhängt, wobei bei jedem ersten Modul (5) jede erste Fläche (8) durch eine flache Platte (2) definiert ist und eine achteckige Form hat, und wobei jede zweite Fläche (9) eine dreieckige Form hat und durch drei flache Flächen, die lotrecht zueinander positioniert sind, begrenzt wird.

8. Die Struktur zur Unterwasserinstallation nach jedem der Patenansprüche 1 bis 7, wobei jedes zweite Modul (6) eine einzige flache Platte (2) beinhaltet.

9. Die Struktur zur Unterwasserinstallation nach dem Patenanspruch 8, wobei jedes zweite Modul (6) mit mindestens einem ersten Modul (5) verbunden ist, solcherart, dass seine flache Platte (2) parallel zu und komplanar mit mindestens einer flachen Platte (2) des ersten Moduls (5) ist, mit dem sie verbunden ist.

10. Die Struktur zur Unterwasserinstallation nach jedem der Patenansprüche 1 bis 9, auch ein oder mehrere dritte Module beinhaltend, wobei sich jedes dritte Modul (13) von den ersten Modulen (5) und von den zweiten Modulen (6) unterscheidet, fertig montiert ist, eine Mehrzahl flacher Platten (2), die miteinander verbunden sind, beinhaltet und mit einem oder mehreren ersten Modulen (5) und/oder zweiten Modulen (6) verbunden ist.

11. Die Struktur zur Unterwasserinstallation nach jedem der Patenansprüche 1 bis 10, wobei eine oder mehrere flache Platten (2) massiv sind und/oder wobei eine oder mehrere flache Platten (2) mit einer Mehrzahl erster Löcher (3) ausgestattet sind und/oder wobei eine oder mehrere flache Platten (2) mit einer Mehrzahl zweiter Löcher (4), die sich von den ersten Löchern unterscheiden, ausgestattet sind.

12. Die Struktur zur Unterwasserinstallation nach dem Patenanspruch 2 und jedem der anderen, wobei, wenn die Struktur (1) installiert ist, das eine oder die mehreren ersten Module (5) einen Zentralkern der Struktur (1) bilden und mindestens einige des einen oder der mehreren ersten Module (5) mit einer ihrer zweiten Flächen (9) auf dem Boden (10) des Gewässers liegend positioniert sind, und zumindest einige der zweiten Module (6) an den ersten Modulen (5) befestigt sind und auf dem Boden (10) des Gewässers liegen.

13. Die Struktur zur Unterwasserinstallation nach jedem der Patenansprüche 1 bis 12, auch eine Mehrzahl von Versteifungsstangen (12), die zwischen einem oder mehreren ersten Modulen (5) und/oder zwischen einem oder mehreren zweiten Modulen (6) und/oder zwischen einem oder mehreren ersten Modulen (5) und einem oder mehreren zweiten Modulen (6) montiert sind, beinhaltend.

14. Die Struktur zur Unterwasserinstallation nach jedem der Patenansprüche 1 bis 13, wobei jede der vier oder mehreren flachen Platten (2), die miteinander verbunden sind und die polyedrische Struktur (7) definieren, eine Fläche der polyedrischen Struktur (7) darstellen.

15. Ein Verfahren zur Herstellung der Struktur zur Unterwasserinstallation (1) nach jedem der Patenansprüche 1 bis 14, folgende Arbeitsschritte beinhaltend:
Montage eines oder mehrere erster Module (5) durch die Verbindung einer Mehrzahl flacher Platten (2) miteinander;
Positionierung des einen oder der mehreren ersten Module (5) auf einem Unterwasserboden (10) eines Gewässers in vorher festgelegten Positionen im Verhältnis zueinander;
wenn zwei oder mehrere erste Module (5) vorhanden sind,
Verbindung der ersten Module (5) miteinander;
Verbindung einer Mehrzahl von zweiten Modulen (6) mit den ersten Modulen (5);
wobei der Schritt der Verbindung der Mehrzahl zweiter Module (6) mit den ersten Modulen (5) nach dem Schritt der Montage des einen oder der mehreren ersten Module (5) durchgeführt wird.

16. Das Verfahren nach dem Patentanspruch 15, wenn er von 2 abhängt, wobei die ersten Module (5) mit den zweiten Flächen (9) auf dem Unterwasserboden (10) eines Gewässers liegend positioniert sind.

## Revendications

1. Une structure d'installation sous-marine comprenant une pluralité de plaques plates (2) raccordées les unes aux autres, les plaques plates (2) ayant une forme polygonale et étant essentiellement constituées de béton, ladite structure étant **caractérisée en ce que** la structure d'installation sous-marine comprend au moins un ou plus premiers modules (5) et un ou plus deuxièmes modules (6) raccordés les uns aux autres, les premiers modules (5) étant différents des deuxièmes modules (6), chaque deuxième module (6) comprenant une ou plus desdites plaques plates (2), et chaque premier module (5) comprenant une structure polyédrique (7) définie par quatre ou plus desdites plaques plates (2) raccordées les unes aux autres.

2. La structure d'installation sous-marine selon la revendication 1, dans laquelle la structure polyédrique (7) comprend une pluralité de premières faces (8) définies chacune par une plaque plate (2), et une pluralité de deuxièmes faces (9) vides, chacune périmétralement délimitée par une pluralité de plaques plates (2) qui définissent les premières faces (8).

3. La structure d'installation sous-marine selon la revendication 2, dans laquelle les deuxièmes faces (9) sont plus petites que les premières faces (8).

4. La structure d'installation sous-marine selon la revendication 1, 2 ou 3, dans laquelle chaque plaque plate (2) a une forme octogonale.

5. La structure d'installation sous-marine selon la revendication 4, dans laquelle chaque plaque plate (2) a la forme d'un octogone rectangulaire.

6. La structure d'installation sous-marine selon l'une quelconque des revendications de 1 à 5, dans laquelle chaque premier module (5) comprend six plaques plates (2) raccordées les unes aux autres et positionnées de manière à ce que chaque plaque plate (2) définisse une partie d'une face différente d'un cube.

7. La structure d'installation sous-marine selon la revendication 6 quand dépendant de la revendication 2 et de la revendication 5, dans laquelle, dans chaque premier module (5), chaque première face (8) est définie par une plaque plate (2) et a une forme octogonale, et dans laquelle chaque deuxième face (9) a une forme triangulaire et est délimitée par trois faces plates positionnées perpendiculairement les unes par rapport aux autres.

8. La structure d'installation sous-marine selon l'une quelconque des revendications de 1 à 7, dans laquelle chaque deuxième module (6) comprend une seule plaque plate (2).

9. La structure d'installation sous-marine selon la revendication 8, dans laquelle chaque deuxième module (6) est raccordé à au moins un premier module (5) de manière à ce que sa plaque plate (2) soit parallèle à et coplanaire avec au moins une plaque plate (2) du premier module (5) à laquelle elle est raccordée.

10. La structure d'installation sous-marine selon l'une quelconque des revendications de 1 à 9, comprenant également un ou plus troisièmes modules, dans laquelle chaque troisième module (13) est différent des premiers modules (5) et des deuxièmes modules (6), est préassemblé, comprend une pluralité de plaques plates (2) raccordées les unes aux autres, et est raccordé à un ou plus premiers modules (5) et/ou deuxièmes modules (6).

11. La structure d'installation sous-marine selon l'une quelconque des revendications de 1 à 10, dans laquelle une ou plus plaques plates (2) sont pleines, et/ou dans laquelle une ou plus plaques plates (2) sont dotées d'une pluralité de premiers trous (3), et/ou dans laquelle une ou plus plaques plates (2) sont dotées d'une pluralité de deuxièmes trous (4) qui sont différents des premiers trous.

12. La structure d'installation sous-marine selon la revendication 2 et l'une quelconque des autres revendications, dans laquelle, lorsque la structure (1) est installée, lesdits un ou plus premiers modules (5) constituent un noyau central de la structure (1) et au moins certains desdits un ou plus premiers modules (5) sont positionnés avec une de leurs deuxièmes faces (9) en appui sur le fond (10) de l'étendue d'eau, et au moins certains des deuxièmes modules (6) sont fixés aux premiers modules (5) et reposent sur le fond (10) de l'étendue d'eau.

13. La structure d'installation sous-marine selon l'une quelconque des revendications de 1 à 12, comprenant également une pluralité de barres de renforcement (12) montées entre un ou plus premiers modules (5), et/ou entre un ou plus deuxièmes modules (6), et/ou entre un ou plus premiers modules (5) et un ou plus deuxièmes modules (6).

14. La structure d'installation sous-marine selon l'une quelconque des revendications de 1 à 13, dans laquelle chacune desdites quatre ou plus plaques plates (2) qui sont raccordées les unes aux autres, et définissent la structure polyédrique (7), constitue une face de la structure polyédrique (7).

15. Un procédé pour réaliser la structure d'installation sous-marine (1) selon l'une quelconque des revendications de 1 à 14, comprenant les étapes opérationnelles suivantes :
assembler un ou plus premiers modules (5) en assujettissant une pluralité de plaques plates (2) les unes avec les autres ;
positionner lesdits un ou plus premiers modules (5) sur un fond sous-marin (10) dans des positions réciproques prédéterminées ;
si deux ou plus premiers modules (5) sont présents, assujettir les premiers modules (5) les uns avec les autres ;
assujettir une pluralité de deuxièmes modules (6) avec les premiers modules (5) ;
dans lequel l'étape consistant à assujettir la pluralité de deuxièmes modules (6) avec les premiers modules (5) est effectuée après l'étape consistant à assembler lesdits un ou plus premiers modules (5).

16. Le procédé selon la revendication 15 quand dépendant de la revendication 2, dans lequel les premiers modules (5) sont positionnés avec les deuxièmes faces (9) en appui sur le fond sous-marin (10) d'une étendue d'eau.
